# FASCICULE DE BREVET EUROPEEN

(11) **EP 0 497 638 B1**
(45) Date de publication et mention de la délivrance du brevet: **11.09.1996**
(21) Numéro de dépôt: 92400040.9
(22) Date de dépôt: 08.01.1992
(51) Int. Cl.: G01K 11/06

(54) **Dispositif d'indication visuelle irréversible du premier dépassement d'une température de consigne, pour produits de conservation délicate**
Vorrichtung zur visuellen und irreversiblen Anzeige einer ersten Solltemperaturüberschreitung für Produkte mit heikler Konservierung
Irreversible visual indicating device for the first exceeding of a set temperature for products of delicate conservation

(30) Priorité: 29.01.1991 FR 9100953
(43) Date de publication de la demande: 05.08.1992
(73) Titulaire: VERNET, F-91290 Ollainville (FR)
(72) Inventeur: Chamot, Jean-Pierre, F-91290 Arpajon (FR)
(74) Mandataire: Bernasconi, Jean

(56) Documents cités:
- EP-A- 0 092 027
- EP-A- 0 153 259
- GB-A- 2 051 361
- US-A- 3 889 658

## Description

L'invention concerne des dispositifs d'indication visuelle irréversible du premier dépassement d'une température de consigne, pour produits de conservation délicate.

De tels dispositifs ont les applications les plus diverses et il peut s'agir en particulier de contrôler une chaîne de froid dans l'industrie alimentaire (produits congelés ou surgelés) ou le respect des règles de conservation de produits biologiques (sang et dérivés du sang, greffons et produits analogues). Il peut également s'agir de surveiller certains produits pharmaceutiques ou composants électroniques.

On connaît déjà du document US-A-1 535 536 des dispositifs de ce genre qui fonctionnent par simple fusion d'un corps combiné à un colorant mais ces dispositifs connus présentent une sécurité insuffisante.

La demande de brevet français n° FR-A-2 458 801 décrit un procédé et un dispositif pour détecter une décongélation, même temporaire d'un produit, utilisant un diaphragme, un colorant et une solution aqueuse saline. Durant la phase de congélation du produit, la solution aqueuse saline se congèle et augmente donc de volume. Cette augmentation de volume provoque la rupture du diaphragme, ce qui active ou arme le dispositif. En cas de réchauffement, la glace fond et libère le colorant.

Ce dispositif présente donc l'inconvénient de devoir être activé ou armé par congélation, ainsi que celui de ne pouvoir être utilisé qu'à des températures négatives.

La demande de brevet européen n° EP-A-0 153 259 a trait à un dispositif indicateur destiné au contrôle de températures déterminées. Le dispositif qui y est décrit est analogue à celui de FR-A-2 458 801, si ce n'est que le diaphragme est remplacé par un élément en un alliage à mémoire de forme. Ce dispositif nécessite également un armement ou une activation, et certains modes de réalisation utilisant notamment un piston en T associé à un ressort paraissent difficilement réalisables d'un point de vue technique.

Le brevet US-3 889 658 décrivant, quant à lui, un dispositif destiné à signaler in vivo l'état fiévreux d'un animal, n'utilise aucune membrane à éclatement et se situe hors du domaine technique de la présente invention.

L'invention a principalement pour but de réaliser un dispositif qui donne avec sécurité l'indication visuelle recherchée.

A cet effet, l'invention a pour objet un dispositif d'indication visuelle irréversible du premier dépassement d'une température de consigne, pour produits de conservation délicate, lequel dispositif comprend un corps capable de fondre lors du dépassement de cette température et de rendre alors visible un colorant et est essentiellement caractérisé en ce que ce corps est constitué par une cire à forte augmentation de volume lors du susdit dépassement et est enfermé avec le colorant dans un boîtier étanche et opaque, susceptible de réagir en éclatant sous l'effet de la susdite augmentation de volume. De cette façon, le premier dépassement de la température de consigne est signalé visuellement non seulement par la destruction partielle du boîtier, mais encore et surtout par l'apparition hors du boîtier du mélange de cire et de colorant.

De préférence, le boîtier est constitué par une coupelle métallique qui est rendue étanche par une membrane en élastomère à faible élongation, ayant une résistance à l'éclatement plus faible que celle de la coupelle. Dans ce cas, la membrane a avantageusement une couleur (verte par exemple) tranchant avec celle du colorant (rouge par exemple), ce qui permet de constater plus aisément par contraste visuel le dépassement de la température de consigne, en particulier lorsque le produit à surveiller se trouve dans un endroit éclairé de façon insuffisante et/ou en lumière colorée.

Le boîtier est avantageusement logé à l'intérieur d'une enveloppe transparente et étanche, notamment en polyéthylène, susceptible d'être fixée au produit à surveiller ou, plus généralement, à l'emballage de ce produit, d'une manière permanente, par exemple par agrafage, jusqu'à la consommation ou utilisation dudit produit. Le volume intérieur de cette enveloppe non occupé par le boîtier peut être empli d'un gaz ou mélange gazeux ou, de préférence, d'un liquide incolore dans lequel le susdit colorant est soluble ou dispersable.

L'invention va être maintenant décrite à l'aide des modes de réalisation représentés aux dessins annexés.

La figure 1 de ces dessins montre, en coupe diamétrale, un dispositif indicateur établi selon un mode de réalisation simplifié de l'invention.

La figure 2 illustre l'invention à l'aide d'une courbe montrant les variations de l'altitude de la membrane d'une capsule à cire classique, sans éclatement, en fonction de la température.

Les figures 3 et 4 représentent schématiquement deux modes de réalisation pratiques qui sont dérivés de celui de la figure 1.

La figure 5 représente, en coupe diamétrale, un dispositif de sécurité capable d'indiquer en plus le passage au-dessous d'un seuil de température inférieur à la susdite température de consigne.

La figure 6 est une coupe selon la ligne VI-VI de la figure 5.

La figure 7 enfin représente une variante de la figure 5.

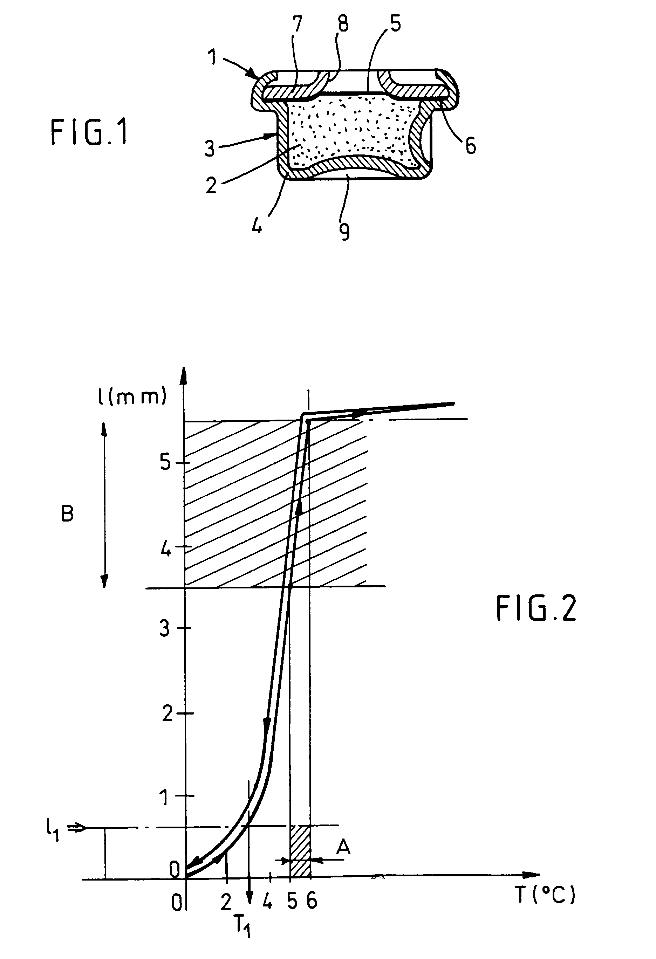

Selon le mode de réalisation de la figure 1, le dispositif indicateur 1 est constitué par un mélange 2 de cire et de colorant enfermé dans un boîtier 3, étanche et opaque, constitué par une coupelle métallique 4, rendue étanche par une membrane 5, de préférence plate, en élastomère à faible élongation. Cette membrane 5 est fixée par pincement, le long de sa circonférence, entre un rebord de la coupelle 4 et un disque métallique 7 serti contre le rebord 6. Le disque 7 possède une ouverture centrale 8 permettant à la membrane 5 de se déformer élastiquement, dans une mesure limitée, sous l'effet de la dilatation de la cire. De façon usuelle, l'ajustement thermique du dispositif peut se faire par un enfoncement local, plus ou moins profond, du boîtier 3, destiné à réduire le volume intérieur de la coupelle 4. De façon connue, cet enfoncement peut se faire soit dans le fond de la coupelle 4, comme représenté en 9 à la figure 1, soit dans la paroi latérale de celle-ci.

Le mélange 2 est fait d'une cire à bas point de fusion (alcane) ou cire de pétrole, ou d'un mélange de telles cires, et d'un colorant, de préférence rouge, incorporé dans la cire ou le mélange de cires sous forme de poudre (par exemple amarante rouge). Sauf exception ressortant du contexte, on désigne ici par "cire" aussi bien une cire homogène qu'un mélange de cires quel qu'en soit le type (alcanes, paraffines, cires microcristallines, cires de polyéthylène).

A la température de fusion de la cire, la dilatation du mélange 2 devient très importante (15 à 20 % en 2°C), ce qui a pour effet de faire éclater la membrane 5 et de répandre la cire avec son colorant à l'extérieur de la coupelle 4, par l'ouverture centrale 8.

La figure 2 montre la variation de l'altitude 1 de la membrane 5 lors de la montée et de la descente de la température T du mélange 2, pour une capsule à cire classique, sans éclatement de la membrane 5.

Les températures usuelles de fusion ou d'éclatement peuvent s'étaler de -30°C à +120°C si l'on utilise des cires à basse température (alcanes), des paraffines, des cires microcristallines et des cires polyéthylène. Comme on le sait, on peut obtenir n'importe quelle température de fusion ou d'éclatement en mélangeant dans de bonnes proportions des cires ayant des points de fusion voisins.

A titre d'exemple, si l'on dispose de deux cires C₁ et C₂ ayant respectivement des points de fusion de 9°C et 19°C, on peut obtenir un point de fusion de 14°C en mélangeant les deux cires en proportions égales (en poids) et un point de fusion de 12°C en mélangeant les deux cires en proportions respectives de 3/4 (cire C₁) et 1/4 (cire C₂).

Il est bien entendu que la fabrication du dispositif indicateur 1 doit en général se faire à une température inférieure à la température de fusion de la cire. La température exacte d'éclatement est réglée lors de la fabrication du dispositif. On dose, de façon connue, une masse de cire de façon précise pour obtenir par exemple une précision de ±2 % sur la dilatation entre deux températures.

Afin de régler exactement la température d'éclatement et de compenser ainsi les dispersions de la coupelle 4 obtenue par emboutissage, on règle l'altitude l₁ de la membrane 5, à la température de calibrage T₁ indiquée à la figure 2, par déformation de la façon indiquée à titre d'exemple en 9 à la figure 1. A cette température T₁, la cire est pâteuse. Pour réaliser le boîtier 3, on le place dans une enceinte à la température T₁ pour régler la déformation que l'on arrête dès que la membrane 5 atteint l'altitude l₁ prévue sur la courbe de la figure 2. Sur cette figure, on a désigné par A la zone de température T et par B la zone d'altitude l où devrait se produire l'éclatement de la membrane 5, en cas de dépassement de la température de consigne.

A titre indicatif, il a été essayé avec succès un dispositif indicateur 1 du type représenté à la figure 1 dont la hauteur hors tout est de l'ordre de 6 mm et dont le diamètre de la coupelle est de l'ordre de 9 mm, l'ouverture 8 ayant un diamètre de l'ordre de 3 mm.

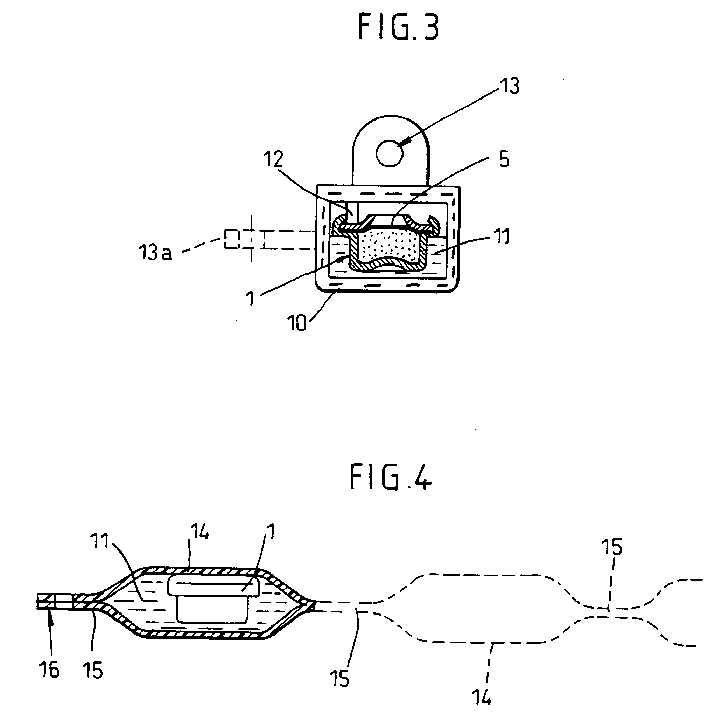

Les figures 3 et 4 montrent comment peut être fixé le dispositif indicateur 1. A la figure 3, le dispositif 1 est logé à l'intérieur d'une enveloppe 10 en polystyrène ou polyéthylène transparent, le volume intérieur de l'enveloppe 10 non occupé par le dispositif 1 étant empli d'un liquide incolore 11. Lorsque l'enveloppe 10 est relativement rigide, le boîtier du dispositif 1 est de préférence immobilisé à l'intérieur de l'enveloppe 10 par une soudure à ultra-sons 12 ou de façon analogue. L'enveloppe 10 est munie d'une patte extérieure 13 ou 13a permettant de la fixer, par agrafage ou scellement, au produit à surveiller ou à l'emballage de celui-ci.

A la figure 4, une série de dispositifs sont logés individuellement dans des enveloppes ou pochettes 14 fabriquées en continu à partir d'un tube souple en matière plastique transparente, qui est soudé transversalement en 15, à intervalles réguliers. Chaque enveloppe 14 est ensuite emplie du liquide 11, par un trou d'injection, puis les dispositifs 1, contenus dans leurs enveloppes respectives 14, sont ensuite séparés les uns des autres au niveau des soudures transversales 15, par une opération de coupe maintenant étanches les enveloppes 14 et laissant sur celles-ci des pattes de fixation 16, analogues aux pattes 13 et 13a.

Le liquide incolore 11 est choisi de façon à rester liquide aux températures d'utilisation du dispositif 1. Il peut être constitué par de l'eau salée dont la concentration est adaptée à ces températures d'utilisation.

Selon les modes de réalisation des figures 3 et 4, on se contente de prendre en compte l'éclatement de la membrane 5 en cas de dépassement de la température de consigne, le colorant et la cire se répandant à l'intérieur de l'enveloppe 10. En particulier, le colorant se répand dans le liquide 11 et le colore, en rouge par exemple.

On peut agencer le dispositif de façon qu'il ne réagisse qu'après une certaine durée de maintien au-delà de la température de consigne. Il suffit pour cela de donner une valeur suffisamment grande à la somme de l'épaisseur du liquide incolore 11 et de la paroi de l'enveloppe 10 ou 14 pour retarder le temps de réaction de la capsule à éclatement de la susdite durée avant la coloration du liquide initialement incolore contenu dans la cire. Cette solution est particulièrement utile dans le cas de produits alimentaires surgelés qui ne deviennent impropres à une nouvelle congélation qu'après avoir été maintenus, pendant un nombre de minutes déterminé, à la température ambiante.

Dans tous les cas, le dispositif 1 conforme à l'invention, attaché d'une façon inviolable dès le départ sur le produit à surveiller, permet de vérifier aisément s'il y a eu rupture de la chaîne de froid, par exemple de la congélation en usine à l'utilisation chez le consommateur. Tant que le liquide 11 reste incolore, le produit est parfaitement utilisable.

Dans ce qui précède, il a été supposé que le dispositif conforme à l'invention servait à indiquer uniquement le premier dépassement d'une température de consigne (par exemple 6°C) mais, selon un perfectionnement, il peut également servir à indiquer le passage au-dessous d'un seuil de température (par exemple 2°C), inférieur à la susdite température de consigne.

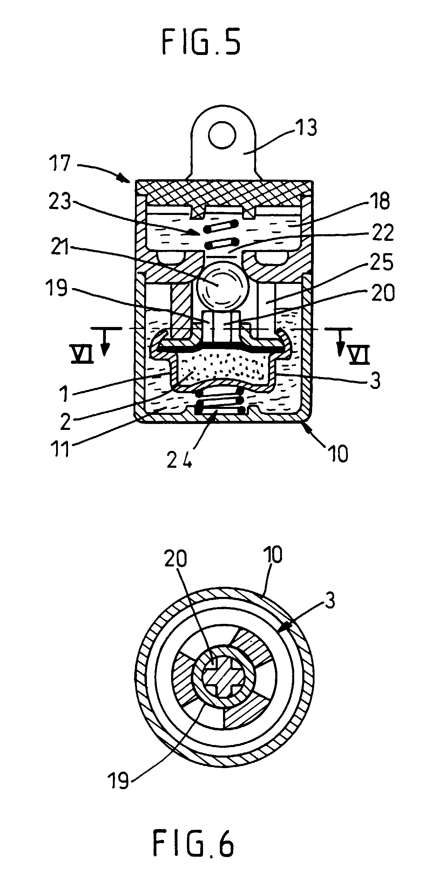

A cet effet et comme le montrent les figures 5 et 6, on a recours à un dispositif 1 comportant, comme dans le cas de la figure 3, un boîtier 3 empli d'un mélange 2 de cire et de colorant et baignant, à l'intérieur d'une enveloppe 10 en matière transparente, dans un liquide incolore 11 et on adapte à l'enveloppe 10 une enveloppe 17 en matière opaque contenant un liquide coloré 18, dont la couleur (jaune par exemple) est différente de celle du colorant (rouge par exemple) de la cire, et on dispose entre les deux enveloppes 10 et 17 un orifice de communication 22 qui est maintenu fermé par action de la membrane 5 tant que le mélange 2 de cire et de colorant a une température comprise entre le susdit seuil et la température de consigne.

Selon la construction représentée, on place dans l'ouverture 8 un guide 19 pour un poussoir 20 qui repose sur la membrane 5 et qui tend à pousser une bille d'étanchéité 21 sur le siège du susdit orifice de communication 22, contre l'action d'un ressort de rappel 23. Un deuxième ressort 24 sert à maintenir en place le boîtier 3 contre une butée annulaire 24. Comme le montre la figure 6, le poussoir 20 est échancré latéralement.

Lorsque la température évolue, le poussoir 20 se déplace suivant la loi de dilatation de la courbe représentée à la figure 2.

Pour une température idéale de conservation comprise entre les deux limites susindiquées à titre d'exemples (2 et 6°C), les éléments occupent les positions représentées à la figure 5. Le liquide coloré 18, qui est maintenu par la bille 21 dans l'enveloppe opaque 17, n'est évidemment pas visible. On ne voit donc de l'extérieur que le liquide 11 qui est alors incolore.

Si la température descend au-dessous de 2°C, la cire se rétracte comme le montre la courbe de la figure 2. Ceci a pour effet de faire reculer la poussoir 20 et la bille 21 et d'ouvrir l'orifice 22. En passant par les échancrures du poussoir 20, le liquide jaune 18 vient ainsi se mélanger au liquide 11 initialement incolore qui devient jaune à son tour, ce qui alerte l'utilisateur.

Si, partant de la température idéale de conservation, la température dépasse celle de consigne (6°C), on retrouve le fonctionnement décrit ci-dessus, par éclatement de la membrane 5. Le liquide 11, initialement incolore, se teinte d'abord en rouge (colorant contenu dans le mélange 2), puis jaunit par mélange avec le liquide 18 libéré par ouverture de la bille 21, ce qui alerte également l'utilisateur.

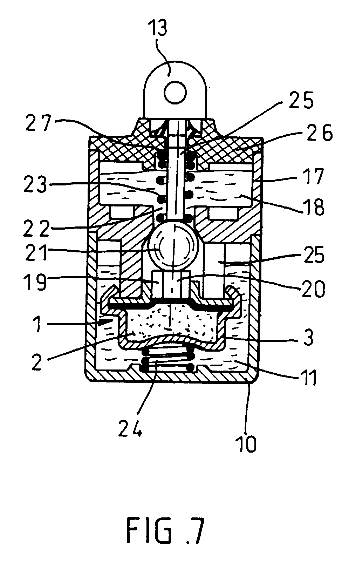

Le mode de réalisation des figures 5 et 6 nécessite que le dispositif indicateur soit maintenu dans l'étroite gamme de température idéale de conservation, entre sa fabrication et son adaptation au produit à surveiller. Mais, grâce à une légère modification représentée à la figure 7, il est possible d'agencer ce dispositif de façon qu'il permette de n'activer le marqueur "basse température" que juste avant sa mise en place sur le produit à surveiller.

Selon la figure 7, la bille 21 est maintenue provisoirement immobilisée contre le siège de l'orifice 22 par des moyens devant être neutralisés par une manoeuvre d'activation. De préférence, ces moyens sont constitués par une tige 25 qui traverse la paroi supérieure 26 de l'enveloppe opaque 17, à l'intérieur d'un joint d'étanchéité torique 27, de façon à être accessible à l'extérieur et qui est fixée à la bille 21. La tige 25 et/ou la liaison entre celle-ci et la bille 21 est ou sont munies d'une zone de rupture obligée. Lors de la mise en place du dispositif, il suffit d'agir sur la partie émergente de la tige 25 pour libérer la bille 21 et activer ainsi le dispositif de sécurité.

## Revendications

1. Dispositif d'indication visuelle irréversible du premier dépassement d'une température de consigne, pour produits de conservation délicate, qui comprend un corps capable de fondre lors du dépassement de cette température et de rendre alors visible un colorant, caractérisé en ce que ce corps est constitué par une cire à forte augmentation de volume lors du susdit dépassement et est enfermé avec le colorant dans un boîtier étanche et opaque (3), susceptible de réagir en éclatant sous l'effet de la susdite augmentation de volume.

2. Dispositif d'indication selon la revendication 1, caractérisé en ce que le boîtier (3) est constitué par une coupelle métallique (4) qui est rendue étanche par une membrane en élastomère (5) à faible élongation, ayant une résistance à l'éclatement plus faible que celle de la coupelle (4).

3. Dispositif d'indication selon la revendication 2, caractérisé en ce que la membrane (5) a une couleur (verte par exemple) tranchant avec celle du colorant (rouge par exemple).

4. Dispositif d'indication selon l'une quelconque des revendications 1 à 3, caractérisé en ce que le boîtier (3) est logé à l'intérieur d'une enveloppe transparente et étanche (10, 14), notamment en polystyrène ou polyéthylène, susceptible d'être fixée au produit à surveiller ou, plus généralement, à l'emballage de ce produit, d'une manière permanente, par exemple par agrafage, jusqu'à la consommation ou utilisation dudit produit.

5. Dispositif d'indication selon la revencation 4, caractérisé en ce que le volume intérieur de la susdite enveloppe (10, 14) non occupé par le boîtier (3) est empli d'un gaz ou mélange gazeux ou, de préférence, d'un liquide incolore (11) dans lequel le susdit colorant est soluble ou dispersable.

6. Dispositif d'indication selon la revendication 5, caractérisé en ce que le volume intérieur de l'enveloppe (10, 14) non occupé par le boîtier (3) est empli d'un liquide incolore (11), et en ce que la somme de l'épaisseur du liquide incolore (11) et de la paroi de l'enveloppe (10, 14) est suffisamment grande pour retarder le temps de réaction de la capsule à éclatement d'une certaine durée de maintien au-delà de la température de consigne, avant la coloration du liquide incolore.

7. Dispositif d'indication selon l'une quelconque des revendications 1 à 6, caractérisé en ce qu'il comporte des moyens sensibles au passage au-dessous d'un seuil de température inférieur à la susdite température de consigne et régissant en libérant un colorant.

8. Dispositif d'indication selon l'ensemble des revendications 2, 5 et 7, caractérisé en ce que le volume intérieur de l'enveloppe (10) non occupé par le boîtier (3) est empli d'un liquide incolore (11), et en ce que la susdite enveloppe (10) est adaptée à une enveloppe (17) en matière opaque contenant un liquide coloré (18), dont la couleur est différente de celle du colorant de la cire, et en ce qu'entre les deux enveloppes (10, 17) est disposé un orifice de communication (22) qui est maintenu fermé par action de la membrane (5) tant que le mélange (2) de cire et de colorant a une température comprise entre le susdit seuil et la température de consigne.

9. Dispositif d'indication selon la revendication 8, caractérisé en ce que, dans l'ouverture (8) est placé un guide (19) pour un poussoir (20) qui repose sur la membrane (5) et qui tend à pousser une bille d'étanchéité (21) sur le siège du susdit orifice de communication (22), contre l'action d'un ressort de rappel (23).

10. Dispositif d'indication selon la revendication 9, caractérisé en ce que la bille (21) est maintenue provisoirement immobilisée contre le siège de l'orifice (22) par des moyens (25) devant être neutralisés par une manoeuvre d'activation.

## Patentansprüche

1. Vorrichtung zur visuellen und irreversiblen Anzeige einer ersten Solltemperaturüberschreitung für Produkte mit heikler Konservierung, die einen Körper aufweist, der beim Übeschreiten dieser Temperatur schmelzen und somit einen Farbstoff sichtbar machen kann, dadurch gekennzeichnet, daß dieser Körper aus einem Wachs mit starker volumenvergrößerung beim obengenannten Überschreiten gebildet ist und mit dem Farbstoff in einem dichten und undurchsichtigen Behälter (3) eingeschlossen ist, der zur Reaktion imstande ist, indem er unter der Wirkung der genannten volumenvergrößerung platzt.

2. Anzeigevorrichtung nach Anspruch 1, dadurch gekennzeichnet, daß der Behälter (3) aus einer metallischen Schale (4) gebildet ist, die durch eine Elastomer-Membran (5) mit geringer Ausdehnung dicht gehalten ist, welche einen Berstwiderstand hat, der geringer ist als der der Schale (4).

3. Anzeigevorrichtung nach Anspruch 2, dadurch gekennzeichnet, daß die Membran (5) eine Farbe (grün zum Beispiel) hat, die sich von der des Farbstoffes (rot zum Beispiel) stark abhebt.

4. Anzeigevorrichtung nach einem der Ansprüche 1 bis 3, dadurch gekennzeichnet, daß der Behälter (3) im Inneren einer transparenten und dichten Hülle (10, 14) untergebracht ist, insbesondere aus Polystyrol oder Polyethylen, die geeignet ist, an dem zu überwachenden Produkt oder, allgemeiner, an der Verpackung dieses Produktes, in dauerhafter Weise, beispielsweise durch Anheften, bis zum Verzehr oder dem Gebrauch des Produktes, befestigt zu werden.

5. Anzeigevorrichtung nach Anspruch 4, dadurch gekennzeichnet, daß das Innenvolumen der obengenannten Hülle (10, 14), das von dem Behälter (3) nicht belegt ist, mit einem Gas oder einer gasförmigen Mischung oder, bevorzugt, mit einer ungefärbten Flüssigkeit (11) angefüllt ist, in dem/der der obengenannte Farbstoff löslich oder dispergierbar ist.

6. Anzeigevorrichtung nach Anspruch 5, dadurch gekennzeichnet, daß das Innenvolumen der Hülle (10, 14), das von dem Behälter (3) nicht belegt ist, mit einer ungefärbten Flüssigkeit (11) angefüllt ist und daß die Summe aus Dicke der ungefärbten Flüssigkeit (11) und der Wand der Hülle (10, 14) ausreichend groß ist, um die Reaktionszeit der Kapsel beim Platzen um eine bestimmte Verbleibdauer über der Solltemperatur, vor dem Färben der ungefärbten Flüssigkeit zu verzögern.

7. Anzeigevorrichtung nach einem der Ansprüche 1 bis 6, dadurch gekennzeichnet, daß sie Einrichtungen aufweist, die auf das Durchfahren unter eine Schwellentemperatur, die geringer ist als die obengenannte Solltemperatur, empfindlich sind und reagieren, indem sie einen Farbstoff freigeben.

8. Anzeigevorrichtung nach der Gesamtheit der Ansprüche 2, 5 und 7, dadurch gekennzeichnet, daß das Innenvolumen der Hülle (10), das nicht von dem Behälter (3) belegt ist, mit einer ungefärbten Flüssigkeit (11) angefüllt ist und daß die obengenannte Hülle (10) an eine Hülle (17) aus undurchsichtigem Material angepaßt ist, die eine gefärbte Flüssigkeit (18) enthält, deren Farbe unterschiedlich von dem Farbstoff des Wachses ist, und daß zwischen den beiden Hüllen (10, 17) eine Kommunikationsöffnung (22) angeordnet ist, die durch die Wirkung der Membran (5) geschlossen gehalten wird, während die Mischung (2) aus Wachs und aus Farbstoff eine Temperatur hat, die zwischen der obengenannten Schwelle und der Solltemperatur liegt.

9. Anzeigevorrichtung nach Anspruch 8, dadurch gekennzeichnet, daß in der Öffnung (8) eine Führung (19) für einen Schieber (20) angeordnet ist, der auf der Membran (5) ruht und der eine Dichtkugel (21) auf die Einfassung der Kommunikationsöffnung (22) gegen die Wirkung einer Rückstellfeder (23) schieben wird.

10. Anzeigevorrichtung nach Anspruch 9, dadurch gekennzeichnet, daß die Kugel (21) zeitweilig unbeweglich an der Einfassung der Öffnung (22) gehalten wird, durch Einrichtungen (25), die durch ein Aktiviermanöver neutralisiert werden müssen.

## Claims

1. An irreversible visual indication device for the first exceeding of a set temperature, for products of delicate conservation, which comprises a body capable of melting when this temperature is exceeded and of then displaying a colouring, characterised in that this body consists of a wax with a large increase in volume during the said exceeding, and is enclosed with the colouring in a water-tight and opaque case (3) capable of reacting by bursting under the effect of the said increase in volume.

2. An indication device according to Claim 1, characterised in that the case (3) comprises a metal dish (4) rendered water-tight by an elastomer membrane (5) with a low level of extension and having a lower resistance to bursting than the dish (4).

3. An indication device according to Claim 2, characterised in that the membrane (5) has a colour (for example, green) which contrasts sharply with the colour of the colouring (for example, red).

4. An indication device according to any one of Claims 1 to 3, characterised in that the case (3) is housed inside a transparent and water-tight wrapping (10, 14), made of polystyrene or polythene in particular, capable of being fastened to the product to be monitored or, more generally, to the packaging of this product, in a permanent manner, by stapling for example, until consumption or use of the said product.

5. An indication device according to Claim 4, characterised in that the internal volume of the aforementioned wrapping (10, 14), not occupied by the case (3), is filled with a gas or a gaseous mixture or, preferably, with a colourless liquid (11) in which the aforementioned colouring is soluble and dispersible.

6. An indication device according to Claim 5, characterised in that the internal volume of the wrapping (10, 14), not occupied by the case (3), is filled with a colourless liquid (11), and the sum of the thickness of the colourless liquid (11) and of the wall of the wrapping (10, 14) is sufficiently great to slow down the capsule reaction time to bursting by a certain holding period above the set temperature, before colouring of the colourless liquid.

7. An indication device according to any one of Claims 1 to 6, characterised in that it has means which is sensitive to the fall below a temperature threshold lower than the aforementioned set temperature and which reacts by releasing a colouring.

8. An indication device according to all the claims 2, 3 and 7, characterised in that the internal volume of the wrapping (10), not occupied by the case (3), is filled with a colourless liquid (11), and the aforementioned wrapping (10) is fitted to a wrapping (17) in an opaque material containing a coloured liquid (18), the colour thereof being different from that of the colouring of the wax, and a connecting opening (22) is arranged between two wrappings (10, 17) and is kept closed by the action of the membrane (5) as long as the mixture (2) of wax and colouring has a temperature between the aforementioned threshold temperature and the set temperature.

9. An indication device according to Claim 8, characterised in that there is arranged in the opening (8) a guide (19) for a pushing device (20) which rests on the membrane (5) and which aims to push a ball for water-tightness (21) onto the seat of the aforementioned connection opening (22), against the action of a return spring (23).

10. An indication device according to Claim 9, characterised in that the ball (21) is held stationary temporarily against the seat of the opening (22) by some means (25) before being cancelled by an activation operation.
